# EUROPEAN PATENT APPLICATION

(11) **EP 2 540 557 A1**
(43) Date of publication of application: **02.01.2013**
(21) Application number: 12174333.0
(22) Date of filing: 29.06.2012
(51) Int. Cl.: B60N 2/015, B60N 2/06, B60N 2/20, B60N 2/24

(54) **Back support**

(30) Priority: 01.07.2011 GB 201111232
(71) Applicant: Rescroft Limited, East Moons Moat Redditch, Worcestershire B98 0RE (GB)
(72) Inventor: Karas, Marcin, Redditch, Worcestershire B98 0RE (GB); Kimberley, Jason, Redditch, Worcestershire B98 0RE (GB)
(74) Representative: Ashton, Timothy

(57) **Abstract**

A back support (20, 20') including;
a backrest part (22, 22') for supporting a back of a person; and
connection means (30, 30') for connecting the backrest part (22, 22') to a fixed body (10, 60),
wherein the connection means (30, 30') permits the backrest part (22, 22') to be moved between stored and deployed conditions, and wherein the connection means (30, 30') permits movement of the backrest part (22, 22') laterally away from the fixed body (10, 60).

## Description

### Description of Invention

This invention relates to a back support. More particularly, but not exclusively, this invention relates to a back support for supporting the back of a person sitting on a wheelchair, whilst that wheelchair and person are being transported on a vehicle.

It is known to provide a seat fitting for a vehicle, the seat fitting being of the kind which provides a seat for an ambulant passenger or a station at which a wheelchair can be secured, depending on the configuration of the fitting at the time. There are many vehicles, generally, but not exclusively, motor vehicles, which are routinely used to transport ambulant passengers and wheelchair users, and which are required to provide variable numbers of seats for the former and stations for securing the wheelchairs of the latter. Such seat fittings are difficult to design as they need to provide the ambulant passengers with an adequate degree of protection should the vehicle be involved in an accident, or provide the wheelchair with secure anchorage and wheelchair user with protection, whilst also using the space within the vehicle effectively.

An important requirement for such seat fittings is that when used as a station for securing a wheelchair thereto it needs to provide support for the wheelchair user's back and head. Prior art seat fittings have attempted to provide this support in a number of ways. One known configuration is to use the seat/cushion of the seat as the backrest. Another proposal is to pivot the seat downwardly away from the backrest and to an opposite side of the seat, such that the wheelchair is moved close to the backrest of the seat, with that backrest providing support for the user's back.

According to one aspect of the invention, we provide a back support including;
a backrest part for supporting a back of a person; and
connection means for connecting the backrest part to a fixed body,
wherein the connection means permits the backrest part to be moved between stored and deployed conditions, and wherein the connection means permits movement of the backrest part laterally away from the fixed body.

According to another aspect of the invention, we provide a back support for engagement with a backrest of a wheelchair, including;
a backrest part for supporting a back of a person supported on the wheelchair; and
connection means for connecting the backrest part to a fixed body,
wherein the connection means permits the backrest part to be moved laterally away from the fixed body between a stored condition in which the backrest part lies close to the fixed body and a deployed condition in which the backrest part is spaced from the fixed body with said spacing being sufficient to accommodate a portion of the rear wheels of the wheelchair so as to enable the backrest of the wheelchair to engage the backrest part.

According to another aspect of the invention, we provide a seat fitting including a back support according to the first aspect of the invention.

According to another aspect of the invention, we provide a vehicle including a seat fitting according to the second aspect of the invention.

According to another aspect of the invention, we provide a vehicle including a back support according to the first aspect of the invention.

Further features of the various aspects of the invention are set out below.

In the stored condition, a generally upright axis of the backrest part may be substantially vertical.

In the deployed condition, a generally upright axis of the backrest part may be inclined at an angle to the vertical.

In the deployed condition, a lowermost portion of the backrest part may be positioned further away from the fixed body than an uppermost portion of the backrest part.

The back support according may include a headrest part connected to the backrest part.

The connection means may include first and second connection members which are pivotally connected to each other.

The first and second connection members may be pivotally connected to each other substantially midway between their ends.

The first connection member may be pivotally connected at or near a first end thereof to the backrest part and may be pivotally connectable at or near its opposite second end to the fixed body.

The second end of the first connection member may be slidably moveable relative to its connection to the fixed body.

The second connection member may be pivotally connected at or near a second end thereof to the backrest part and may be pivotally connectable at or near its opposite first end to the fixed body.

The second end of the second connection member may be slidably moveable relative to its connection to the backrest part.

The back support may include a pair of said second members.

The second member may be positioned at each side of the first connection member.

Tthe backrest part may be lockable in its deployed and/or stored conditions.

The back support may include user operable means to unlocking the backrest part from its stored and/or deployed conditions.

The user operable means may include a pair of graspable handles which are moveable towards each other so as to unlock the backrest part from its stored and/or deployed conditions.

The pair of graspable handles may be biased away from each other.

The back support may include a cover covering a substantial portion of the connection means.

The back support may include a cover covering the connection means.

In a seat fitting or vehicle the connection means may be connected to an opposite side of the seat fitting than the seat.

In a seat fitting or vehicle the seat fitting may include a holding part for holding the backrest part in its stored condition.

The holding part may be connected to an opposite side of the seat fitting than the seat.

The connection means may be connected to a part of the vehicle.

The connection means may be connected to a generally upright part of the vehicle.

Embodiments of the inventions, by way of example only, will be discussed with reference to the accompanying drawings, of which:
Figure 1 is a side view of a seat fitting including the back support of the invention with the back support shown in a deployed condition;
Figure 2 is a side view of a seat fitting including the back support of the invention with the back support shown in a stored condition;
Figure 3 is a side view of a back support of the present invention;
Figure 4 is a rear view of a back support of the present invention;
Figure 5 is a front view of the seat fitting in figures 1 and 2;
Figure 6 is a rear perspective view of the backrest of figures 3 and 4 with the back support shown in a stored condition;
Figure 7 is a rear perspective view of the backrest of figures 3 and 4 with the back support shown in a deployed condition;
Figure 8 is a magnified view of the area A of figure 7;
Figure 9 is an exploded view of the component parts of the back support;
Figure 10 is a side view of the seat fitting of figure 1 with a wheelchair connected thereto;
Figure 11 is a front view of the seat fitting of figure 1 with a wheelchair connected thereto;
Figure 12 is a perspective view of a back support of the invention connected to a wall with the back support shown in a stored condition;
Figure 13 is a side view of a back support of the invention connected to a wall with the back support shown in a deployed condition;
Figure 14 is a perspective view of a back support of the invention connected to a wall with the back support shown in a deployed condition;
Figure 15 is a side view of the back support of figures 12 to 14 with a wheelchair connected thereto; and
Figure 16 is a perspective view of the back support of figures 12 to 14 with a wheelchair connected thereto.

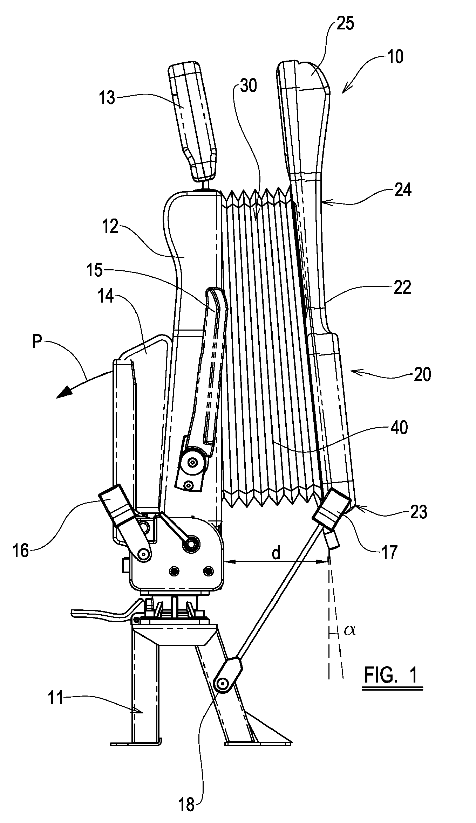

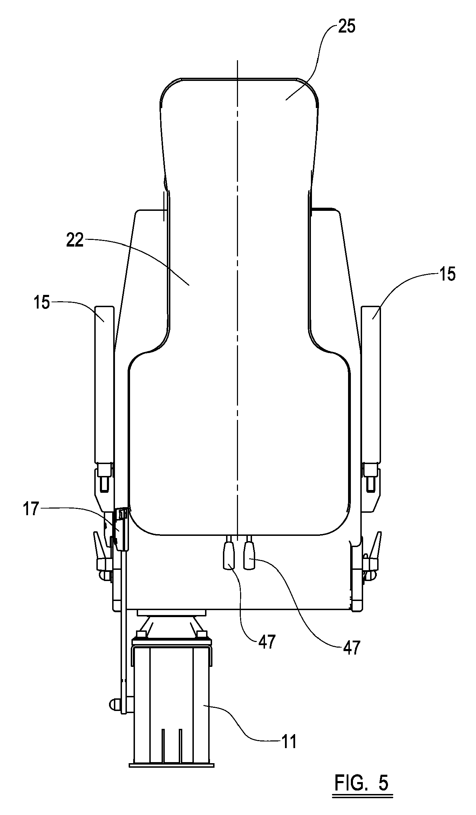

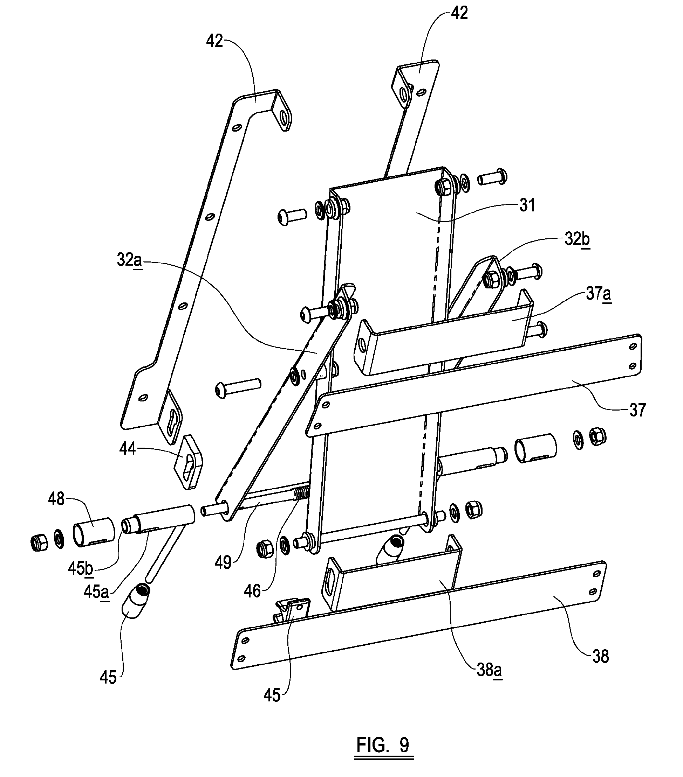

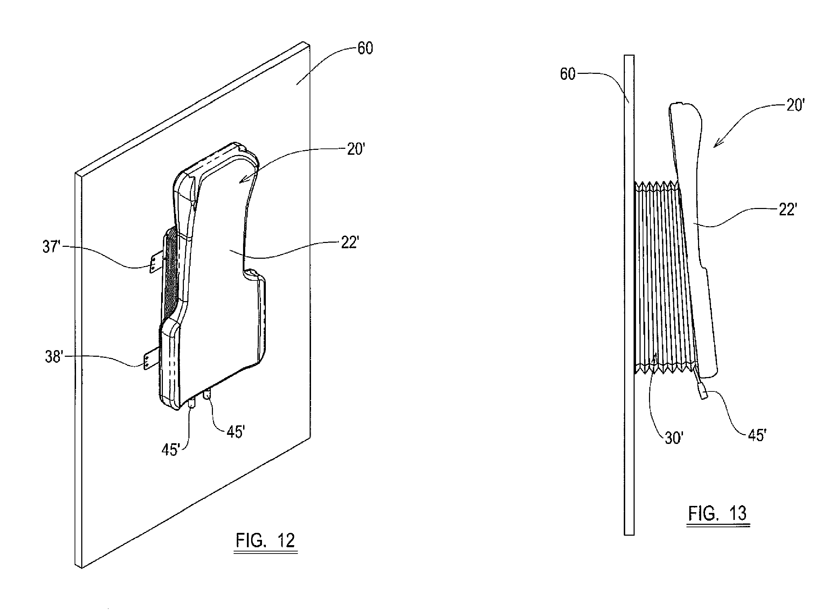

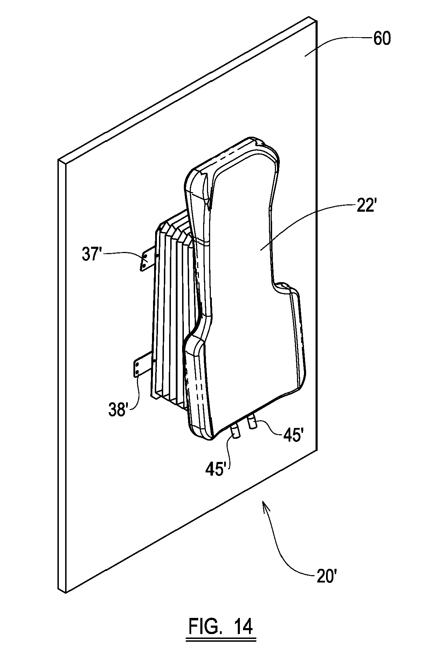

Referring to figures 1 to 11, these show a back support 20 in accordance with the present invention. The figures show the back support 20 connected to a rear side of a seat fitting 10. It should be appreciated, however, that the back support 20 in accordance with the present invention is suitable for connection to many types of fixed body, including many types of vehicles, e.g. motor vehicles such as mini buses or cars or coaches, or boats and trains. In those alternatives, the back support could be connection to a wall or other suitable surface of the vehicle (discussed in great detail below and shown in figures 12 to 16).

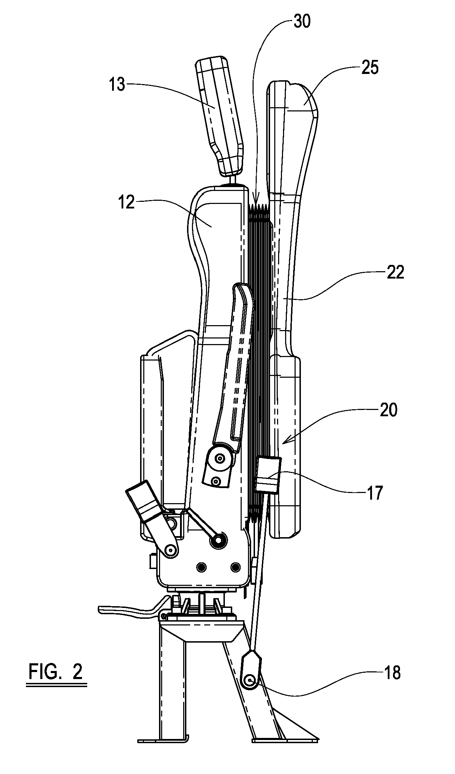

Referring particularly to figures 1 and 2, these show a back support 20 connected to a rear of a seat fitting 10. The seat fitting 10 is anchored to a floor (e.g. of a vehicle) at 11 and is rotatable about a vertical access so that, for example, either the seat or the rear of the seat faces a forward direction of travel of the vehicle. The seat fitting 10 includes a backrest part 12, a head rest part 13 and a seat part 14. The seat part 14 is pivotably moveable in the direction of the arrow P between stored (as shown in figure 1) and deployed conditions. The seat fitting 10 also includes a pair of armrests 15 which are pivotably connected to the backrest part 12, and also a seat belt, the anchorage part 16 of which is pivotably connected to one side of the seat fitting 10.

The back support 20 is connected to a rear of the backrest part 12 of the seat fitting 10 and is moveable between stored (as shown in figure 2) and deployed (as shown in figure 1) conditions. The back support 20 includes a backrest part 22 with a lowermost part indicated generally at 23 and an uppermost part indicated generally at 24. The back support 20 includes a headrest part 25 which is integral with the backrest part 22, although it could, in an alternative embodiment, be a separate component part connected to the backrest part 22.

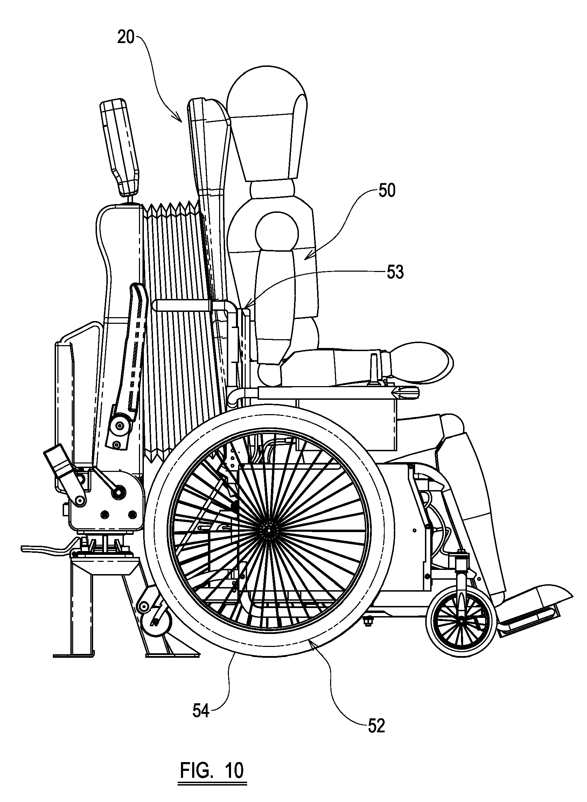

The backrest part 22 is connected to the rear of the backrest part 12 by connection means 30 which permits movement of the backrest part 22 between its stored and deployed conditions laterally away from the backrest part 12. Such lateral movement permits the backrest part 22 to be moved to its usual deployed position (see particularly figure 10, which will be referred to later), but whilst also permitting it to be compactly stored in its stored condition adjacent the rear of the backrest part 12, such that it lies close to a rear of the backrest part 12.

As shown in figures 1 and 2, the connection means 30 is covered by a cover member 40 which covers the component parts of the connection means 30. The cover 40 in the present example is a concertina-type cover (akin to that of an accordion), but it should be appreciated that any suitable cover could be used. The cover 40 serves as a barrier to prevent or at least inhibit user's accidentally trapping their fingers in the component parts of the connection means .30 when moving the backrest part 22 between its stored and deployed conditions.

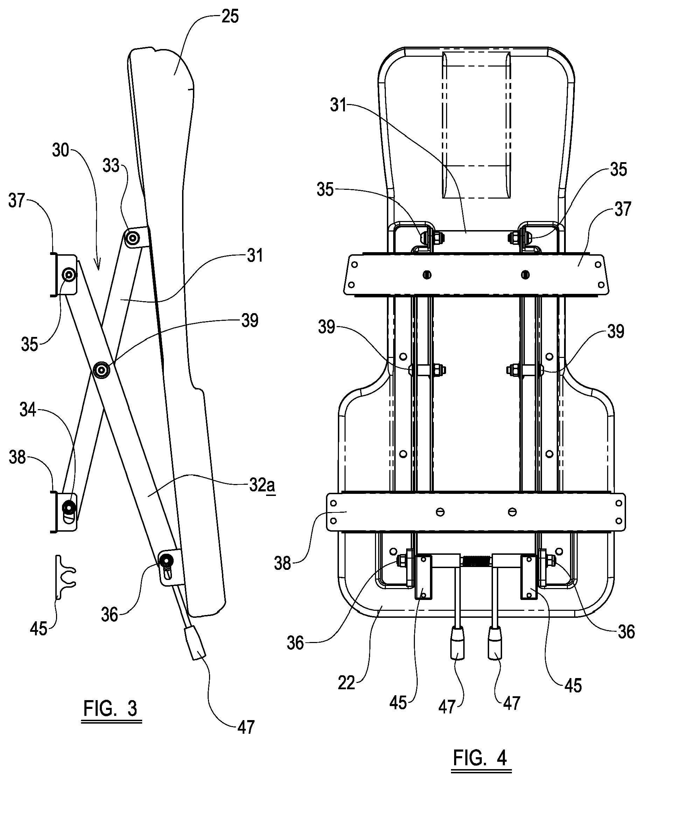

Figures 3 through 9 show in more detail the component parts of the connection means 30. In more detail, the connection means 30 includes first 31 and second 32 connection members which are pivotably connected to each other substantially midway between their ends at 39. In the present example, two second connection members 32a, 32b are provided and, as can be seen in the rear view of figure 4, the second connection members 32a, 32b are each positioned at one side of the first connection member 31. It should be appreciated, however, that if desired, only one second connection member could be used. In yet another alterative embodiment the configuration could be reversed such that two first connection members are provided, either side of one second connection member.

The first connection member 31 is pivotably connected at 33 to an upper part of the rear of the backrest part 22 and is held in that position by an appropriate bracket. An opposite, second, end of the first connection member 31 is connected to a lower part of the rear of the backrest part 12 by a bracket 38. The bracket 38 includes an aperture which permits pivotal and sliding movement of that end of the first connection member 31 relative to the bracket 38.

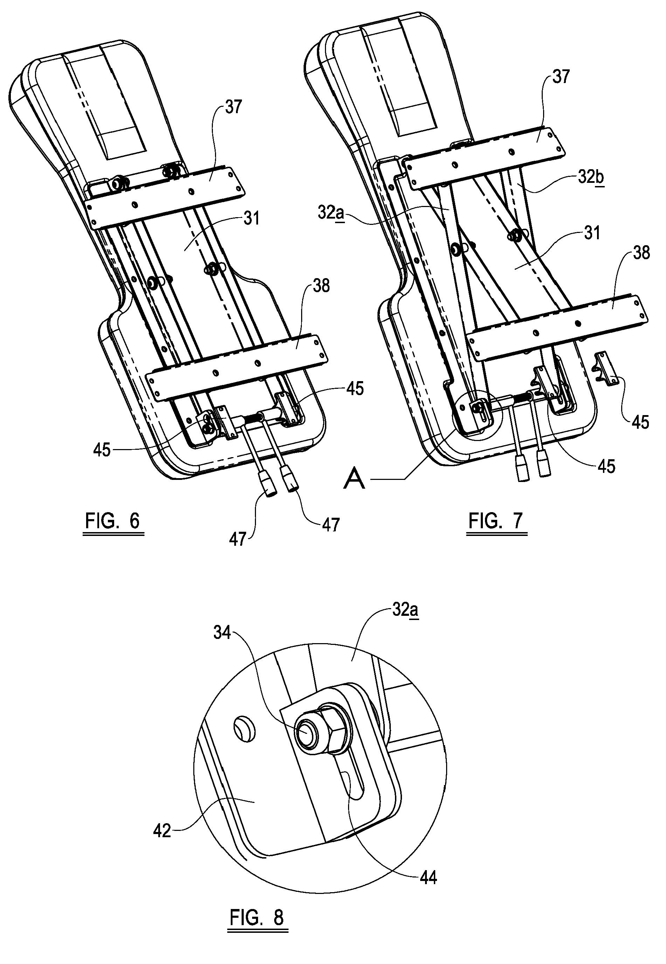

Each of the second connection members 32 is pivotably connected at 35 via a bracket 37 to an upper part of the rear of the backrest part 12, such that they can pivot about that bracket. A second end of each second connection member 32 is connected to a lowermost part of the rear of the backrest part 22 by a bracket which permits that end of the second connection member 32 to pivot and slide relative to the backrest part 22. The bracket 42 includes a keyhole aperture 44 (see figure 8 for more detail) which provides a means for locking the backrest part 22 in its deployed condition (discussed in more detail later).

As shown in the figures, the back support 20 includes user-operable means, in the form of a pair of graspable handles 47 for locking/unlocking the backrest part 22 from/in its deployed condition so that it can/cannot be moved to/from its stored condition. The back support 20 includes a pair of holding parts 45 for holding the backrest part 22 in its stored condition. The holding parts being secured to a rear of the backrest part 12 and each including a resilient holding formation which engages with a part of the back support 20. In addition (although not shown in the drawings) the user-operable means may be configured for locking/unlocking the backrest part 22 in both its stored and deployed condition, in addition to or in place of the holding parts 45.

In the present example the graspable handles 37 are each connected to a respective a cylindrical part 45a which is supported on an axle 49. In order to provide a smooth sliding movement during use the cylinders 45a are received in respective sheaths 48. The handles 37 are biased away from each other by a spring 46 which is position in between the cylinders 45a. The biasing action of the spring 46 urges cylindrical parts 45a towards their respective keyhole aperture 44 such that a correspondingly shaped part 45b of each cylindrical part 45a is received in the larger part of the aperture 44. In this condition, when the backrest part 22 has been moved to its deployed condition, the parts 45b prevent the backrest part 22 from moving back to its stored condition.

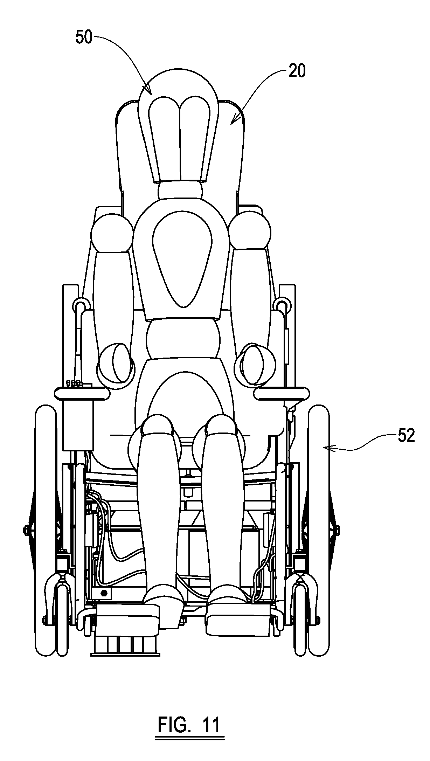

As shown in figures 10 and 11 a wheelchair 52 is reversed into engagement with the backrest part 22, once in its deployed condition, and is fixed in that position by anchorage means (not shown) which secures the chassis and/or other parts of the wheelchair 52 to the floor e.g. of the vehicle. The person 50 sitting in the wheelchair 52 is then secured using a seat belt (not shown) which extends around the person 50 and is locked into the anchorage 17 (which is pivotably connected to the seat fitting anchorage part 11). In this position the person 50 in the wheelchair 52 is safely secured in the vehicle and their back, and also their head, is supported by the back support 20 of the present invention. Thus, if the vehicle were to be involved in an incident, e.g. either an impact or having to brake hard, the person 50 would be less likely to withstand neck injuries, e.g. whiplash. It can also be seen from figure 10 that the spacing between the backrest part 22 and the fixed body (which in this example is the seat fitting 10) is sufficient to accommodate a portion of the rear wheels 54 of the wheelchair, thus enabling a backrest 53 of the wheelchair to engage the backrest part.

It will be noted from figure 1 that when the back support is in the stored condition a generally upright axis of the backrest part 22 thereof is substantially vertical. This provides a very compact stored condition. It will also be seen from figure 2 that when the backrest part 22 is in the deployed condition a generally upright axis of the backrest part 22 is inclined at an angle a to the vertical. In other words, in the deployed condition, a lowermost portion 23 of the backrest part 22 is positioned further away from the rear of the backrest part 12 than an uppermost portion 24 of the backrest part 22. In the present example the angle a of the backrest part 22 to the vertical when in its deployed condition is about 6° but it could be, for example, between 4° and 8°.

As shown in Figure 1 of the drawings, a lateral distance d separates the lower end of the lowermost portion 23 of the backrest part 22 from the rear of the backrest part 12 when the backrest part 22 is in the deployed position. In embodiments, the separation distance d may be in the range of 100-300mm, and preferably in the range 180-200mm. What is important about the separation distance d is that it should be sufficient to enable the backrest 53 of the wheelchair 50 to engage the backrest part 22, for example whilst also providing sufficient space to accommodate a portion of the rear wheels 54 of the wheelchair 50.

As seen in figure 10, an angle to the upright axis of the backrest part 22 is necessary in order to accommodate the position of the person 50 sitting in the wheelchair 52. This angle is similar to the angle of the backrest part 12 of the seat on the opposite side of the seat fitting.

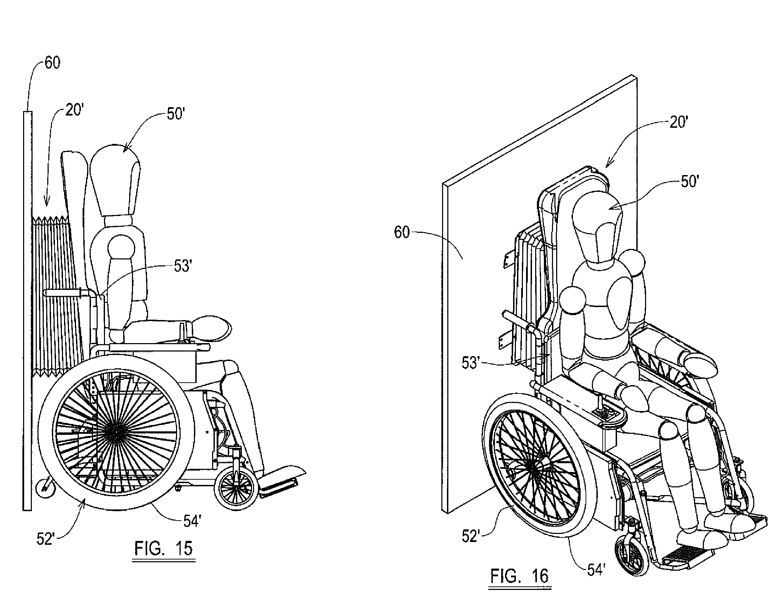

If it was desired to connect the back support 20 to a fixed body other than a seat fitting, all that would be required would be to connect the ends brackets 37, 38 to that fixed body. For example, the fixed body could be a generally vertical surface as shown in figures 12 to 16, e.g. a wall or a bulkhead. In these figures, component parts of the back support 20' which are identical to those shown in figures 1 to 11 have been given the same reference numeral, but with the addition of a prime (') symbol. The back support 20' is connected to the wall 60 and is moveable between its stored and deployed conditions so as to provide back support for a user 50' in a wheelchair 52'. As mentioned above, the wheelchair 52' would be anchored by appropriate means to a floor, so that it does not move during transit. It can also be seen from figures 15 and 16 that the spacing between the backrest part 22' and the fixed body (which in this example is the wall 60) is sufficient to accommodate a portion of the rear wheels of the wheelchair, thus enabling the backrest of the wheelchair to engage the backrest part.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A back support for engagement with a backrest of a wheelchair, including;
a backrest part for supporting a back of a person supported on the wheelchair; and
connection means for connecting the backrest part to a fixed body,
wherein the connection means permits the backrest part to be moved laterally away from the fixed body between a stored condition in which the backrest part lies close to the fixed body and a deployed condition in which the backrest part is spaced from the fixed body with said spacing being sufficient to enable the backrest of the wheelchair to engage the backrest part.

2. A back support according to claim 1, wherein the spacing is sufficient to accommodate a portion of the rear wheels of the wheelchair.

3. A back support according to any preceding claim wherein, in the stored condition, a generally upright axis of the backrest part is substantially vertical.

4. A back support according to any preceding claim wherein, in the deployed condition, a generally upright axis of the backrest part is inclined at an angle to the vertical.

5. A back support according to any preceding claim wherein, in the deployed condition, a lowermost portion of the backrest part is positioned further away from the fixed body than an uppermost portion of the backrest part.

6. A back support according to any preceding claim further including a headrest part connected to the backrest part.

7. A back support according to any preceding claim wherein the connection means includes first and second connection members which are pivotally connected to each other, and preferably wherein the first and second connection members are pivotally connected to each other substantially midway between their ends.

8. A back support according to claim 7 wherein the first connection member is pivotally connected at or near a first end thereof to the backrest part and is pivotally connectable at or near its opposite second end to the fixed body, and/or wherein the second connection member is pivotally connected at or near a second end thereof to the backrest part and is pivotally connectable at or near its opposite first end to the fixed body.

9. A back support according to claim 7 or claim 8 wherein the second end of the first connection member is slidably moveable relative to its connection to the fixed body, and/or wherein the second end of the second connection member is slidably moveable relative to its connection to the backrest part.

10. A back support according to any one of claims 7 to 9 including a pair of said second members, preferably a respective second member being positioned at each side of the first connection member.

11. A back support according to any preceding claim wherein the backrest part is lockable in its deployed and/or stored conditions.

12. A back support according to any preceding claim including user operable means for unlocking the backrest part from its stored and/or deployed conditions, preferably the back support includes a pair of graspable handles which are moveable towards each other so as to unlock the backrest part from its stored and/or deployed conditions, and preferably the pair of graspable handles are biased away from each other.

13. A back support according to any preceding claim including a cover covering a substantial portion of the connection means and/or including a cover covering the connection means.

14. A seat fitting or vehicle induing a back support according to any preceding claim, or a vehicle including such a seat fitting.

15. A seat fitting or vehicle according to claim 14 wherein the connection means is connected to an opposite side of the seat fitting than the seat, and preferably where the seat fitting includes a holding part for holding the backrest part in its stored condition.
